# EUROPEAN PATENT APPLICATION

(11) **EP 4 621 936 A1**
(43) Date of publication of application: **24.09.2025**
(21) Application number: 23905323.4
(22) Date of filing: 07.09.2023
(51) Int. Cl.: H01M 10/613, H01M 10/6551, H01M 10/6568

(54) **HEAT EXCHANGE ASSEMBLY FOR BATTERY, BATTERY MODULE, AND BATTERY PACK**

(30) Priority: 20.12.2022 CN 202211639234; 20.12.2022 CN 202223466696 U
(71) Applicant: Eve Power Co., Ltd., Jingmen, Hubei 448000 (CN)
(72) Inventor: ZHAO, Yuhang, Jingmen, Hubei 448000 (CN); LI, Liangyu, Jingmen, Hubei 448000 (CN); WANG, Yuanyuan, Jingmen, Hubei 448000 (CN); WANG, Zhanzhan, Jingmen, Hubei 448000 (CN)
(74) Representative: Herrero & Asociados, S.L.
(86) International application number: PCT/CN2023/117508
(87) International publication number: WO 2024/131146

(57) **Abstract**

The present disclosure provides a heat exchange assembly for a battery, including: a heat exchange body, where a fluid channel is provided inside the heat exchange body, and at least one heat exchange wall is further provided on the heat exchange body, the heat exchange wall being configured to be in contact with a side surface of a battery cell, and the heat exchange wall being in heat exchange with the fluid channel; and a plurality of protrusion structures, where each protrusion structure is located on a side, of the heat exchange wall, that is close to the fluid channel, and two adjacent protrusion structures abut against each other, to increase a heat exchange area of the heat exchange body and enhance structural strength of the heat exchange body.

## Description

This application claims priority to Chinese Patent Application No. 2022234666966 filed with the China National Intellectual Property Administration on December 20, 2022, and claims priority to Chinese Patent Application No. 2022116392341 filed with the China National Intellectual Property Administration on December 20, 2022, which are incorporated herein by reference in their entireties.

### TECHNICAL FIELD

The present disclosure relates to the field of batteries, and in particular, to a heat exchange assembly for a battery, a battery module, and a battery pack.

### BACKGROUND

With rapid advancement of new energy vehicles, users of pure electric vehicles are demanding higher driving mileages and higher charging rates, and therefore, energy density of battery cells continues to increase. This leads to increasing high heat generation of the battery cells during operation. Consequently, a cylindrical battery pack in the related art has a problem of excessive heat generation. A battery pack in the related art adopts a single liquid-cooling solution for a cylindrical cell, and has low heat exchange efficiency. This solution can merely resolve a problem of heat dissipation for a battery cell at a low charging rate, but can hardly control the temperature to an ideal state under a high-charging-rate charging condition, thereby affecting a service life of the battery cell and causing substantial safety hazards to driving safety.

### TECHNICAL PROBLEM

To overcome at least one of the above-mentioned disadvantages in the prior art, the present disclosure provides a heat exchange assembly for a battery, a battery module, and a battery pack, which resolves a problem of heat dissipation caused by low heat exchange efficiency of an existing battery pack, thereby prolonging a service life of the battery cell and improving a safety coefficient for driving.

### TECHNICAL SOLUTION

In a first aspect, the present disclosure provides a heat exchange assembly for a battery, including:
a heat exchange body, where a fluid channel is provided inside the heat exchange body, and at least one heat exchange wall is further provided on the heat exchange body, the heat exchange wall is configured to be in contact with a side surface of a battery cell, and the heat exchange wall is in heat exchange with the fluid channel; and
a plurality of protrusion structures, where each protrusion structure is located on a side of the heat exchange wall close to the fluid channel, and two adjacent protrusion structures abut against each other, to increase a heat exchange area of the heat exchange body and enhance structural strength of the heat exchange body.

In a second aspect, the present disclosure further discloses a battery module, including:
the above-mentioned heat exchange assembly for a battery;
a battery group, located on a side of the heat exchange body of the heat exchange assembly, where a plurality of battery cells of the battery group are arranged from one end of the heat exchange body in an extending direction of the fluid channel, and each battery cell abuts against the heat exchange wall of the heat exchange body.

In a third aspect, the present disclosure further discloses a battery pack, including a battery case and the above-mentioned battery module, wherein the battery module is assembled and fixed inside the battery case.

### BENEFICIAL EFFECT

The plurality of protrusion structures that abut against each other are delicately provided on the heat exchange walls. In this way, a heat exchange area between the heat exchange medium and the heat exchange body is increased to improve heat exchange efficiency, and a problem of heat dissipation caused by low heat exchange efficiency of an existing battery pack is resolved. In addition, structural strength of the heat exchange body is further enhanced, stable heat dissipation between the heat exchange body and the battery cell is ensured, achieving an unexpected effect of dual benefits, a service life of the battery cell is prolonged, and a safety coefficient for driving is improved.

### BRIEF DESCRIPTION OF THE DRAWINGS

FIG. 1 is a first structural diagram of a heat exchange assembly for a battery according to a first embodiment of the present disclosure;
FIG. 2 is a partially enlarged schematic diagram of part A in FIG. 1;
FIG. 3 is a second structural diagram of a heat exchange assembly for a battery according to the first embodiment of the present disclosure;
FIG. 4 is a partially enlarged schematic diagram of part B in FIG. 3;
FIG. 5 is a structural diagram of a heat exchange body according to the first embodiment of the present disclosure and shown as being broken apart;
FIG. 6 is a partially enlarged schematic diagram of part C in FIG. 5;
FIG. 7 is a water-path flow direction diagram of a heat exchange assembly for a battery according to the first embodiment of the present disclosure;
FIG. 8 is a first overall structural diagram of a battery module according to a second embodiment of the present disclosure; and
FIG. 9 is a second overall structural diagram of a battery module according to the second embodiment of the present disclosure.

Reference numerals: 1 - heat exchange assembly; 11 - heat exchange body; 111 - fluid channel; 112 - heat exchange wall; 113 - protrusion structure; 114 - heat dissipation channel; 12 - main manifold structure; 121 - water inlet; 122 - water outlet; 123 - inlet chamber; 124 - outlet chamber; 125 - first flow diversion chamber; 13 - first baffle; 14 - secondary manifold structure; 141 - second flow diversion chamber; 15 - second baffle; and 2 - battery group.

### EMBODIMENTS OF THE INVENTION

In the description of the present disclosure, it is to be noted that orientation or position relationships indicated by terms such as "upper", "lower", "front", "rear", "left", "right", "vertical", "horizontal", "top", "bottom", "inside", "outside" are orientation or position relationships based on the drawings, which are merely for convenience of describing the present disclosure and simplifying the description, rather than indicating or implying that the indicated apparatus or elements are to have a specific orientation or are to be constructed and operated in a specific orientation. Therefore, these terms cannot be construed as a limitation to the present disclosure.

A plurality of protrusion structures are provided on a heat exchange wall of a heat exchange body, so that a heat exchange area between a heat exchange medium within a fluid channel and the heat exchange body is greatly increased, and a large amount of heat released by a battery cell is transferred to each protrusion structure through the heat exchange wall and finally transferred to the heat exchange medium through the protrusion structure, thereby greatly improving heat exchange efficiency between the battery cell and the heat exchange medium. When the battery cell in an operating state has increasing high heat generation, the heat exchange body can still ensure an efficient heat dissipation effect, thereby avoiding a problem of heat accumulation caused by a plurality of battery cells being provided in the battery pack. In addition, it is ensured that each battery cell is within a relatively optimal temperature range. This facilitates balanced temperature consistency control of the battery pack, especially when it is necessary to increase the number of battery cells and their charging rate.

More importantly, each protrusion structure serves as a reinforcing rib structure of the heat exchange body, and two adjacent protrusion structures abut against each other, thereby effectively improving structural strength of the heat exchange assembly, reducing and even avoiding deformation of the heat exchange assembly caused by a squeeze, and effectively ensuring an unexpected effect of stable heat exchange between the heat exchange assembly and the battery cell.

In an embodiment, each protrusion structure extends from one end of the fluid channel in an extending direction of the fluid channel.

In an embodiment, two heat exchange walls are provided on the heat exchange body, the two heat exchange walls are respectively located on two opposite sides of the fluid channel.

In an embodiment, a cross section of the protrusion structure is triangular.

In an embodiment, the heat exchange wall is defined as being perpendicular to a horizontal plane, so a direction in which the heat exchange wall is perpendicular to the horizontal plane is a height extending direction of the heat exchange wall; and
a plurality of independent fluid channels are provided inside the heat exchange body, the plurality of fluid channels are arranged in the height extending direction of the heat exchange wall, and two adjacent fluid channels are communicated end to end to form a serpentine channel.

In an embodiment, the heat exchange assembly for a battery further includes a main manifold structure. A main manifold structure chamber, a water inlet, and a water outlet are provided on the main manifold structure, both the water inlet and the water outlet are communicated with the main manifold structure chamber, the main manifold structure is connected to an end of the heat exchange body, and the fluid channel is communicated with the main manifold structure chamber.

In an embodiment, a plurality of first baffles are provided between an end of the fluid channel and the main manifold structure, the main manifold structure chamber is divided by the plurality of first baffles into an inlet chamber, an outlet chamber and at least one first flow diversion chamber, two adjacent fluid channels are communicated end to end through each first flow diversion chamber, one end of the serpentine channel is communicated with the water inlet through the inlet chamber, and the other end of the serpentine channel is communicated with the water outlet through the outlet chamber.

In an embodiment, the heat exchange assembly for a battery further includes a secondary manifold structure. The main manifold structure and the secondary manifold structure are respectively connected to two opposite ends of the heat exchange body; and
a secondary manifold structure chamber is provided on the secondary manifold structure, and at least one second baffle is provided between an end of the fluid channel and the secondary manifold structure, the secondary manifold structure chamber is divided by the at least one second baffle into a plurality of second flow diversion chambers, and two adjacent fluid channels are communicated end to end through each second flow diversion chamber.

In an embodiment, the heat exchange assemblies are provided on two opposite sides of the battery group, and main manifold structures of the two heat exchange assemblies are in communication with each other.

In an embodiment, the battery cell is a cylindrical cell, and the heat exchange wall is provided in a wave-shaped configuration.

In an embodiment, a plurality of battery groups and a plurality of heat exchange assemblies are included, each heat exchange assembly is provided between two adjacent battery groups, the plurality of battery groups are disposed in a staggered arrangement, and main manifold structures of two adjacent heat exchange assemblies are in communication with each other.

### First Embodiment

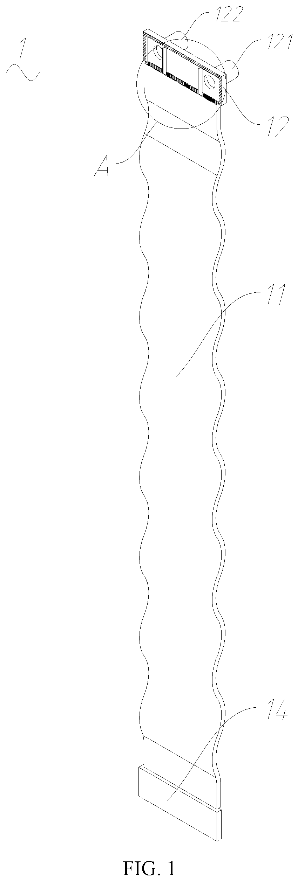

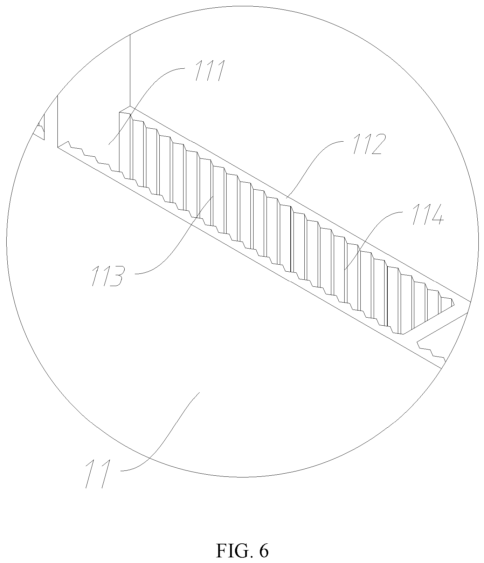

Specifically, as shown in conjunction with FIG. 1 to FIG. 6, the present disclosure provides a heat exchange assembly 1 for a battery, including a heat exchange body 11. A fluid channel 111 is provided inside the heat exchange body 11, and at least one heat exchange wall 112 is further provided on the heat exchange body 11. The heat exchange wall 112 is configured to be in contact with a side surface of a battery cell, and the heat exchange wall 112 is in heat exchange with the fluid channel 111.

Specifically, the heat exchange body 11 is applied to heat exchange of a battery cell. Here, the battery cell includes a cylindrical battery and a prismatic battery. As the heat exchange wall 112 of the heat exchange body 11 is in contact with a side wall of the battery cell to form a heat exchange surface, a cross section of the fluid channel 111 is rectangular, that is, a side edge on which the heat exchange wall 112 is disposed on the fluid channel 111 fits tightly with a side edge of the battery cell. A heat exchange medium, for example, water, is injected into the fluid channel 111, such that the heat exchange medium flows in and fills the fluid channel 111. Since a temperature difference is formed between the heat exchange medium and the battery cell, a large amount of heat is transferred to a low temperature side from a high temperature side.

When the battery cell is in a charging state or a discharging state for a long time, or when thermal runaway occurs in a battery cell, the battery cell is at a high temperature but a heat exchange medium at a low temperature is conveyed inside the fluid channel 111, so a large amount of heat released by the battery cell is transferred to the heat exchange medium inside the fluid channel 111 through the heat exchange wall 112. The heat exchange medium that carries the large amount of heat is finally conveyed out of the heat exchange body 11, achieving heat dissipation of the battery cell.

When the battery cell is in a lower-temperature environment for a long time, the overall temperature of the battery cell becomes relatively low but a heat exchange medium at a high temperature is conveyed inside the fluid channel 111, in this way heat inside the heat exchange medium, when flows through the battery cell, is transferred to the battery cell through the heat exchange wall 112.

In conclusion, adjusting the temperature of the battery cell through the heat exchange body 11 causes the battery cell to be always in an optimal temperature environment, thereby ensuring that the battery cell always maintains in an optimal use state.

When a high heat exchange efficiency is needed, the temperature of the heat exchange medium is generally controlled to increase the temperature difference between the heat exchange medium and the battery cell, or a flow speed of the heat exchange medium is controlled. Key points of this solution are as follows.

The heat exchange assembly 1 further includes a plurality of protrusion structures 113 each located on a side of the heat exchange wall 112 close to the fluid channel 111, and two adjacent protrusion structures 113 abut against each other, to increase a heat exchange area of the heat exchange body 11 and enhance structural strength of the heat exchange body 11.

In this embodiment, through the protrusion structure 113, when the heat exchange medium flows through any unit of the fluid channel 111, a contact area between the fluid medium and the protrusion structure 113 is greater than a contact area between the fluid medium and the heat exchange wall 112. In other words, a heat exchange area between the fluid medium and the heat exchange assembly 1 is increased. In addition, a great amount of heat released by the battery cell is transferred to the heat exchange body 11 and then is transferred to each protrusion structure 113. A surface of each protrusion structure 113 and a planar structure of the heat exchange wall 112 form a plurality of dissipation surfaces, so as to quickly dissipate the large amount of heat into the heat exchange medium. Therefore, heat exchange efficiency is quickly improved through the plurality of protrusion structures 113.

Unexpectedly, as two adjacent protrusion structures 113 abut against each other, in one aspect, each protrusion structure 113 serves as each reinforcing rib structure/convex rib structure arranged on the heat exchange body 11. Due to the compact arrangement between the two adjacent protrusion structures 113, a larger number of protrusion structures 113 can be arranged within the fluid channel 111. In this case, when the heat exchange wall 112 is subject to specific impact force or a torque, the plurality of protrusion structures 113 can simultaneously bear and distribute the impact force or torque, to improve structural strength of the heat exchange assembly 1.

In another aspect, when an acting force is applied in an arrangement direction of the plurality of protrusion structures 113, two adjacent protrusion structures 113 abut against and are in contact with each other to form an acting force and a reacting force. Under this condition, the plurality of protrusion structures 113 can cooperatively bear external forces or torque to a certain extent. Therefore, structural strength of the heat exchange assembly 1 can be effectively improved through the plurality of protrusion structures 113, which avoids a risk of deformation or damage to the heat exchange body 11.

A direction perpendicular to a cross section of the protrusion structure 113 is defined as an extending direction of the protrusion structure 113. In this embodiment, the extending direction of the protrusion structure 113 can be perpendicular to an extending direction of the fluid channel 111. In this case, the plurality of protrusion structures 113 are arranged and distributed along the extending direction of the fluid channel 111, from one end of the fluid channel 111 to the other end of the fluid channel 111.

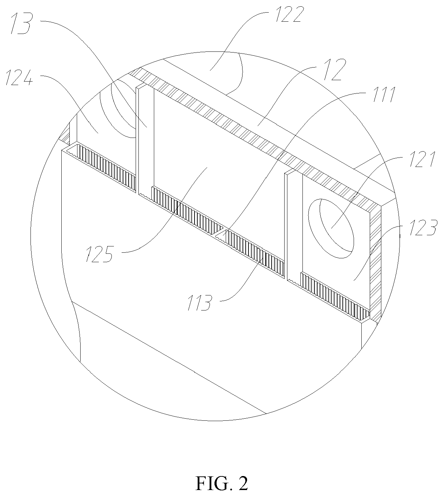

As a preferable solution, specifically as shown in FIG. 2, FIG. 4 and FIG. 6, each protrusion structure 113 extends in the extending direction of the fluid channel 111 from one end of the fluid channel 111. In other words, the extending direction of each protrusion structure 113 is parallel to the extending direction of the fluid channel 111, and the plurality of protrusion structures 113 are arranged and distributed along a direction perpendicular to the extending direction of the fluid channel 111 from one side wall of the heat exchange wall 112 to the other side wall of the heat exchange wall 112.

In this case, two adjacent protrusion structures 113 abut against each other to form a heat dissipation channel 114. The extending direction of the heat dissipation channel 114 is same as the extending direction of the fluid channel 111, and an area of a cross section of the heat dissipation channel 114 is far less than an area of a cross section of the fluid channel 111. In other words, a spacing between two adjacent protrusion structures 113 is far less than a spacing between two opposite sides of the fluid channel 111. Therefore, a flow speed of the heat exchange medium in the heat dissipation channel 114 is relatively higher than in the fluid channel 111, thereby further effectively improving heat exchange efficiency of the heat exchange assembly 1.

In addition, in comparison with a manner in which the protrusion structure 113 is disposed as being perpendicular to the extending direction of the fluid channel 111, the heat exchange medium can be effectively prevented from generating specific resistance in a process of flowing through the protrusion structure 113, which ensures that the heat exchange medium smoothly flows in the flowing process. In addition, the heat exchange body 11 is easy to be produced and manufactured.

Further, specifically as shown in FIG. 2, FIG. 4 and FIG. 6, two heat exchange walls 112 are provided on the heat exchange body 11, and the two heat exchange walls 112 are respectively located on two opposite sides of the fluid channel 111. In this case, when two battery cells are respectively disposed on the two opposite sides of the heat exchange body 11, both the two battery cells can be in heat exchange with the heat exchange medium inside the fluid channel 111 through the heat exchange walls 112. In other words, heat released by both the two battery cells in charging and discharging processes can be simultaneously absorbed quickly by the heat exchange body 11.

In one aspect, the heat released by the two battery cells is transferred from the both sides of the heat exchange body 11 to the heat exchange walls 112, and then is transferred from the heat exchange walls 112 to the protrusion structure 113, ultimately diffusing into and converging within the heat exchange medium in the fluid channel 111, which further improves heat exchange efficiency of the heat exchange body 11 and a utilization rate of the heat exchange medium.

In another aspect, the two battery cells arranged on two opposite sides of the heat exchanger body 11 exert compressive forces upon the heat exchanger body 11. Under the effect of the protrusion structures 113 provided on the two heat exchange walls 112, the heat exchanger body 11 can effectively prevent deformation when subjected to such compressive forces. Thus, while improving heat exchange efficiency, the structural stability of the heat exchanger body 11 is effectively ensured, further achieving the unexpected advantage of maintaining stable heat transfer simultaneously with both battery cells.

It is to be noted that a cross section of each above-mentioned protrusion structure 113 is preferably triangular. Based on characteristics of a triangle, each protrusion structure 113 is relatively stable, thus ensuring the heat exchanger body 11 remains in an optimal stable state. However, the present invention is not limited to triangular shapes; alternative shapes such as rounded triangular shapes (with rounded corners) or trapezoidal cross-sections may also serve as substitute structures for the protruding structure 113 in this embodiment.

Although the heat exchange efficiency of the heat exchanger 11 has been greatly improved by arranging the plurality of protruding structures 113 in the fluid channel 111 as described above, thus ensuring that heat released from the battery cells can be effectively absorbed and dissipated by the heat exchange medium and consequently increasing the cooling efficiency of the battery cells, the amount of heat generated by the battery cells during normal charging and discharging processes is not particularly large, and a stable heat exchange process with the heat exchanger 11 is consistently maintained. Therefore, the amount of heat transferred from the battery cells to the heat exchange medium as it flows from one end of the fluid channel 111 to the other is relatively small.

The plurality of protrusion structures 113 being disposed on the fluid channel 111 has greatly improved heat exchange efficiency of the heat exchange body 11, and ensures that heat energy released by the battery cell can be effectively absorbed and taken away by the heat exchange medium, thereby improving heat dissipation efficiency of the battery cell. However, heat released by the battery cell in normal charging and discharging processes is not especially large, and a stable heat exchange process between the battery cell and the heat exchange body 11 is always kept. Therefore, the heat, from the battery cell, carried by the heat exchange medium flowing from one end of the fluid channel 111 to the other end of the fluid channel 111 is relatively less.

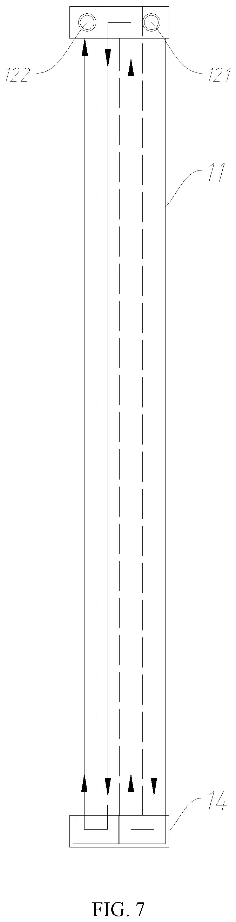

Based on the foregoing disadvantages, the present disclosure further provides a further improved solution. Specifically as shown in FIG. 7, the heat exchange wall 112 is defined as being perpendicular to the horizontal plane, so a direction in which the heat exchange wall 112 is perpendicular to the horizontal plane is a height extending direction of the heat exchange wall 112, and a direction in which the heat exchange wall 112 is parallel to the horizontal plane is an extending direction of the fluid channel 111.

A plurality of independent fluid channels 111 are provided inside the heat exchange body 11. The term "independent" herein refers that the heat exchange medium within each fluid channel 111 does not generate interference with the heat exchange medium within another fluid channel 111, ensuring stable fluid flow within each corresponding fluid channel 111. Specifically, a plurality of fluid channels 111 are arranged along the height extending direction of the heat exchange wall 112, and adjacent fluid channels 111 are connected end-to-end to form a serpentine channel.

In this case, the battery cells in contact with the heat exchange body 11 are vertically placed in a direction perpendicular to the horizontal plane. After flowing into the serpentine channel, the heat exchange medium flows in a zigzag path from top to bottom or from bottom to top in the height extending direction of the heat exchange wall 112. That is, the heat exchange medium flows in a zigzag path from bottom to top or from top to bottom in the height direction of the battery cell, which increases a flow path of the heat exchange medium in the heat exchange body 11, so that heat exchange time between the heat exchange medium and the battery cell is greatly increased, thereby effectively improving a utilization rate of the heat exchange medium.

Unexpectedly, the heat exchange medium can flow in a zigzag path in the height direction of the battery cell for heat exchange, and can further a temperature difference of the battery cell at different heights.

Further, specifically as shown in FIG. 1 and FIG. 2, the heat exchange assembly 1 for a battery further includes a main manifold structure 12. A main manifold structure chamber, and a water inlet 121 and a water outlet 122 that are communicated with the main manifold structure chamber are provided on the main manifold structure 12. The main manifold structure 12 is connected to an end of the heat exchange body 11, and the fluid channel 111 is communicated with the main manifold structure chamber.

The water inlet 121 is in communication with an external input tube, and the water outlet 122 is in communication with an external output tube. In this case, the heat exchange medium is conveyed to the water inlet 121 through the external input tube, and the heat exchange medium flows into the main manifold structure chamber through the water inlet 121, thereby enabling the heat transfer medium to be introduced into the heat exchange assembly 1. After flowing and filling all fluid channels 111, the heat transfer medium, which has absorbed or released a substantial amount of heat, exits from the outlet 122 and then flows into the external outlet tube.

Two adjacent fluid channels 111 are connected end to end, forming a serpentine channel. Specifically, as shown in FIG. 1 and FIG. 2, two first baffles 13 are provided between an end of the fluid channel 111 and the main manifold structure 12. The main manifold structure chamber is divided by the two first baffles 13 into an inlet chamber 123, an outlet chamber 124, and a first flow diversion chamber 125 which interconnects two adjacent fluid channels 111 end to end. That is, the two adjacent fluid channels 111 are communicated end to end through the first flow diversion chamber 125. Under an action of the first baffles 13, the heat exchange medium inside the inlet chamber 123 does not directly flow into the first flow diversion chamber 125, and the heat exchange medium inside the first flow diversion chamber 125 does not directly flow into the outlet chamber 124, so that the inlet chamber 123, the outlet chamber 124, and the first flow diversion chamber 125 are independent of each other.

One end of the serpentine channel is communicated with the water inlet 121 through the inlet chamber 123, and the other end of the serpentine channel is communicated with the water outlet 122 through the outlet chamber 124. The inlet chamber 123 is in communication with the water inlet 121, and the outlet chamber 124 is in communication with the water outlet 122. The heat exchange medium entering the inlet chamber 123 via the inlet end 121 flows into the serpentine channel under the obstruction and guidance of the first baffle plates 13, specifically flowing into the fluid channel 111 communicating with the inlet chamber 123.

Under an action of the first flow diversion chamber 125, two adjacent fluid channels 111 are communicated with each other, so that the heat exchange medium that flows out from the fluid channels 111 neither flow back into the inlet chamber 123, nor directly flow into the outlet chamber 124. This ensures that the heat exchange medium that flows out from a fluid channel 111 enters the first flow diversion chamber 125 and then is guided into an adjacent fluid channel 111, so that ends of the plurality of fluid channels 111 that are connected to the main manifold structure 12 are communicated end to end.

The heat exchange medium inside the serpentine channel finally flows into the outlet chamber 124. That is, the heat exchange medium is output to the outlet chamber 124 by the fluid channel 111 that is communicated with the outlet chamber 124. The heat exchange medium is blocked and guided by the first baffle 13 to flow through the outlet chamber 124, and then is output from the water outlet 122.

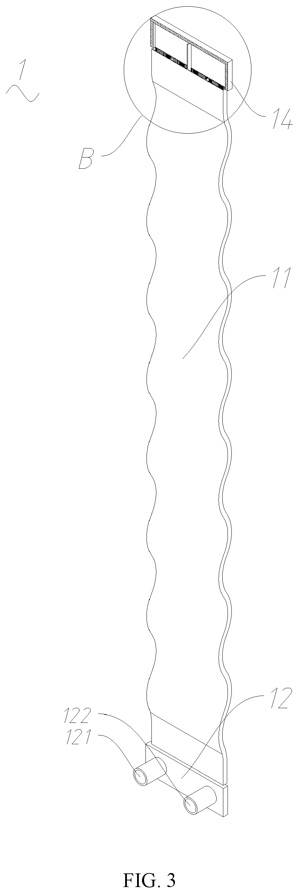

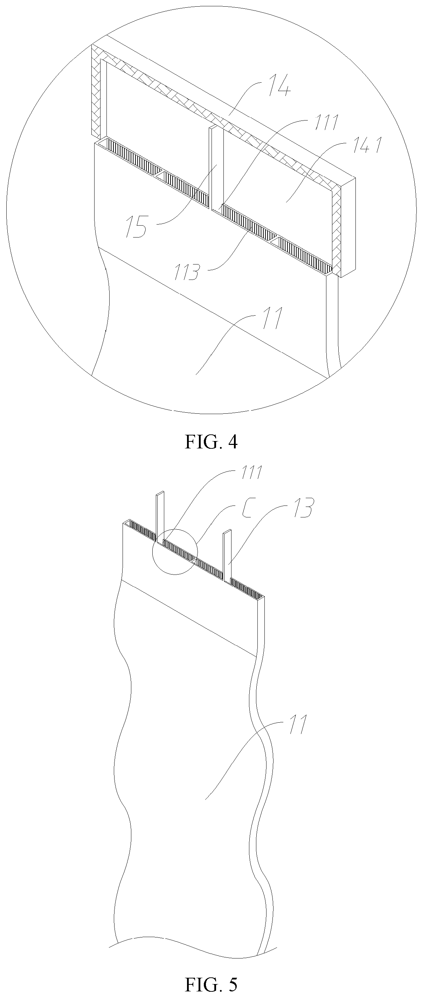

Further, as shown in FIG. 3 and FIG. 4, the heat exchange assembly 1 for a battery further includes a secondary manifold structure 14, where the main manifold structure 12 and the secondary manifold structure 14 are respectively connected to two opposite ends of the heat exchange body 11.

A secondary manifold structure chamber is provided on the secondary manifold structure 14, and a second baffle 15 is provided between an end of the fluid channel 111 and the secondary manifold structure 14. Under an action of the second baffle 15, the heat exchange medium within a second flow diversion chamber 141 does not directly flow into an adjacent second flow diversion chamber 141, so that a plurality of second flow diversion chambers 141 are independent from each other. In addition, the secondary manifold structure chamber is divided by the second baffle 15 into two second flow diversion chambers 141 through which two adjacent fluid channels 111 are communicated end to end. That is, the two adjacent fluid channels 111 are communicated end to end through the second flow diversion chambers 141.

That is, one end of a fluid channel 111, under an action of the first flow diversion chamber 125 of the main manifold structure 12, achieves the end-to-end communication of two adjacent fluid channels 111, and the other end of the fluid channel 111, under an action of the second flow diversion chamber 141 of the secondary manifold structure 14, achieves the end-to-end communication of two adjacent fluid channels 111. Under an action of the second flow diversion chamber 141, the heat exchange medium that flows out from a fluid channel 111 can stably enter the second flow diversion chamber 141 and then is guided into an adjacent fluid channel 111, so that ends of the plurality of fluid channels 111 that are connected to the secondary manifold structure 14 are communicated end to end.

It is to be noted that, the above-mentioned first baffles 13 are not limited to two, and can also be three, four, five, and the like. Correspondingly, a quantity of second baffles 15 provided on the secondary manifold structure 14 is two, three, four, and the like, and a quantity of fluid channels 111 provided on the heat exchange body 11 is correspondingly six, eight, ten. The specific quantities can be specifically adjusted according to a battery design and a design requirement.

In addition, the plurality of first baffles 13 are fixedly connected to an end of the heat exchange body 11 preferably, so the main manifold structure 12 is merely provided with the main manifold structure chamber. In a production and assembly process, the plurality of first baffles 13 on the heat exchange body 11 are inserted into the main manifold structure chamber of the main manifold structure 12, and the main manifold structure 12 is fixedly connected to the heat exchange body 11. This facilitates production and manufacturing, and location and alignment are not needed in the assembly process. Alternatively, the plurality of first baffles 13 are all fixedly connected to the inside of the main manifold structure chamber of the main manifold structure 12, and then the main manifold structure 12 is fixedly connected to the heat exchange body 11.

Similarly, at least one second baffle 15 is fixedly connected to an end of the heat exchange body 11 preferably, so the secondary manifold structure 14 is merely provided with the secondary manifold structure chamber. In a production and assembly process, the second baffle 15 on the heat exchange body 11 is inserted into the secondary manifold structure chamber of the secondary manifold structure 14, and the secondary manifold structure 14 is fixedly connected to the heat exchange body 11. Further, the at least one second baffle 15 is fixedly connected to the inside of the secondary manifold structure chamber of the secondary manifold structure 14, and then the secondary manifold structure 14 is fixedly connected to the heat exchange body 11.

### Second Embodiment

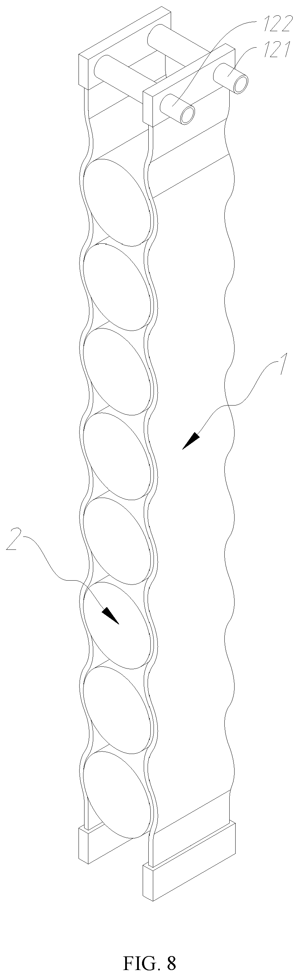

Based on the heat exchange assembly 1 for a battery described in the first embodiment, and specifically referring to FIG. 8, the present disclosure further discloses a battery module using the heat exchange assembly 1 for a battery, including:
the above-mentioned heat exchange assembly 1 for a battery;
a battery group 2, where the battery group 2 is located on one side of the heat exchange body 11 of the heat exchange assembly 1, and a plurality of battery cells of the battery group 2 are arranged, from one end of the heat exchange body 11, in an extending direction of the fluid channel 111, and each battery cell abuts against the heat exchange wall 112 of the heat exchange body 11, so that each battery cell can fit tightly with the heat exchange wall 112, to ensure that each battery cell can exchange heat with a heat exchange medium within the fluid channel 111.

Through a plurality of protrusion structures 113 on the heat exchange body 11, each battery cell can form efficient heat exchange with the heat exchange wall 112. In particular, it is ensured that any battery cell in an over-charging or over-discharging or thermal runaway conditions dissipates heat quickly via the heat exchange assembly 1. Consequently, the risk of thermal propagation within the battery group 2 under thermal runaway conditions is effectively avoided, thus ensuring stability during the battery module's operation. Additionally, by guiding the heat exchange medium to flow in a zigzag path along the vertical direction and exchange heat with multiple battery cells, the temperature differences between the battery cells can be effectively controlled, thereby achieving balanced temperature distribution and uniform thermal management within the battery group.

Preferably, as shown in FIG. 8, heat exchange assemblies 1 are provided on two opposite sides of the battery group 2, and main manifold structures 12 of the two heat exchange assemblies 1 are in communication with each other. Specifically, water inlets 121 of the two main manifold structures 12 are communicated with each other through a conduit, and water outlets 122 of the two main manifold structures 12 are communicated with each other through a conduit. In this case, when the heat exchange medium is supplied to one of the two heat exchange assemblies 1 through an external input tube, the heat exchange medium is simultaneously supplied to the other one of the two heat exchange assemblies 1, so that both the two heat exchange assemblies 1 are filled up with the heat exchange medium.

Heat exchange walls 112 of the two heat exchange bodies 11 both abut against side surfaces of the battery cell, so that the battery cell can uniformly dissipate the heat to opposite sides, which achieves uniform heat dissipation. This also improves heat dissipation efficiency of the battery group 2, ensuring that the battery group 2 maintains in an optimal use state.

In this embodiment, as shown in FIG. 8, the above-mentioned battery cell is preferably a cylindrical cell, and correspondingly, the heat exchange wall 112 adopts a wave-shaped configuration. In other words, the heat exchange wall 112 of each heat exchange body 11 has a plurality of arcuate-curved troughs. Each battery cell correspondingly abuts against and fits tightly within a corresponding trough. Moreover, the shape and dimensions of each curved trough preferably match those of the corresponding battery cell, thereby maximizing the heat-exchange surface area between each battery cell and the heat-exchange wall 112. This configuration effectively maximizes heat transfer efficiency of each battery cell in the battery pack 2 and significantly reduces the risk of thermal runaway occurring within the battery pack 2.

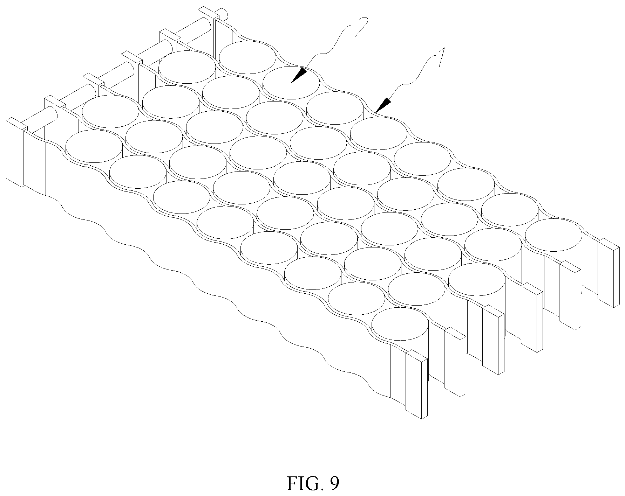

Further, specifically as shown in FIG. 9, the battery module includes a plurality of battery groups 2 and a plurality of heat exchange assemblies 1. Each heat exchange assembly 1 is provided between two adjacent battery groups 2, and the plurality of battery groups 2 are disposed in a staggered arrangement. Main manifold structures 12 of two adjacent heat exchange assemblies 1 are in communication with each other.

Specifically, a heat exchange assembly 1 is respectively provided on outer sides of two outermost battery groups 2. Water inlets 121 of two adjacent main manifold structures 12 are communicated with each other through a conduit, and water outlets 122 of two adjacent main manifold structures 12 are communicated with each other through a conduit. In other words, the plurality of heat exchange assemblies 1 are connected in parallel. Accordingly, when the heat exchange medium is simultaneously supplied to each heat exchange assembly 1, any battery group 2 can evenly dissipate heat toward both sides simultaneously. As a result, each battery group 2 can be maintained at an optimal operating temperature. Meanwhile, since the heat exchange assembly 1 is mounted and secured between two battery groups 2, it effectively reduces the occupied space within the battery module, thereby significantly saving the internal space occupied by the liquid cooling system within the battery pack. Furthermore, since the externally supplied heat exchange medium is divided among multiple heat exchange assemblies 1, this arrangement unexpectedly reduces the flow resistance within the battery liquid cooling system.

### Third Embodiment

The present disclosure further discloses a battery pack using the heat exchange assembly 1 for a battery in the first embodiment and the battery module in the second embodiment. The battery pack includes a battery case and the above-mentioned battery module, where the battery module is assembled and fixed inside the battery case.

Therefore, by skillfully utilizing this heat exchange assembly 1 and its corresponding battery module, it is possible to rapidly dissipate heat from each individual battery cell, thereby ensuring that every battery cell consistently remains within its optimal temperature range. This effectively addresses the issues of high temperature and temperature inconsistency arising from high-rate fast charging in new-energy electric vehicles. Moreover, even as energy density requirements for power batteries continue to increase, this battery pack can still maintain optimal performance and stability, thereby extending the cycle life of the battery pack.

## Claims

1. A heat exchange assembly (1) for a battery, comprising:
a heat exchange body (11), wherein a fluid channel (111) is provided inside the heat exchange body (11), and at least one heat exchange wall (112) is further provided on the heat exchange body (11), the heat exchange wall (112) is configured to be in contact with a side surface of a battery cell, and the heat exchange wall (112) is in heat exchange with the fluid channel (111); and
a plurality of protrusion structures (113), wherein each protrusion structure (113) is located on a side of the heat exchange wall (112) close to the fluid channel (111), and two adjacent protrusion structures (113) abut against each other, so as to increase a heat exchange area of the heat exchange body (11) and enhance structural strength of the heat exchange body (11).

2. The heat exchange assembly (1) for a battery according to claim 1, wherein each protrusion structure (113) extends from one end of the fluid channel (111) in an extending direction of the fluid channel (111).

3. The heat exchange assembly (1) for a battery according to claim 1, wherein two heat exchange walls (112) are provided on the heat exchange body (11), and the two heat exchange walls (112) are respectively located on two opposite sides of the fluid channel (111).

4. The heat exchange assembly (1) for a battery according to claim 1 or 2 or 3, wherein a cross section of the protrusion structure (113) is triangular.

5. The heat exchange assembly (1) for a battery according to claim 1 or 2 or 3, wherein the heat exchange wall (112) is defined as being perpendicular to a horizontal plane, so a direction in which the heat exchange wall (112) is perpendicular to the horizontal plane is a height extending direction of the heat exchange wall (112); and
a plurality of independent fluid channels (111) are provided inside the heat exchange body (11), the plurality of fluid channels (111) are arranged in the height extending direction of the heat exchange wall (112), and two adjacent fluid channels (111) are communicated end to end to form a serpentine channel.

6. The heat exchange assembly (1) for a battery according to claim 5, further comprising a main manifold structure (12), wherein a main manifold structure chamber, a water inlet (121), and a water outlet (122) are provided on the main manifold structure (12), both the water inlet (121) and the water outlet (122) are communicated with the main manifold structure chamber, the main manifold structure (12) is connected to an end of the heat exchange body (11), and the fluid channel (111) is communicated with the main manifold structure chamber.

7. The heat exchange assembly (1) for a battery according to claim 6, wherein a plurality of first baffles (13) are provided between an end of the fluid channel (111) and the main manifold structure (12), the main manifold structure chamber is divided by the plurality of first baffles (13) into an inlet chamber (123), an outlet chamber (124) and at least one first flow diversion chamber (125), two adjacent fluid channels (111) are communicated end to end through each first flow diversion chamber (125), one end of the serpentine channel is communicated with the water inlet (121) through the inlet chamber (123), and the other end of the serpentine channel is communicated with the water outlet (122) through the outlet chamber (124).

8. The heat exchange assembly (1) for a battery according to claim 6, further comprising a secondary manifold structure (14), wherein the main manifold structure (12) and the secondary manifold structure (14) are respectively connected to two opposite ends of the heat exchange body (11); and
a secondary manifold structure chamber is provided on the secondary manifold structure (14), and at least one second baffle (15) is provided between an end of the fluid channel (111) and the secondary manifold structure (14), the secondary manifold structure chamber is divided by the at least one second baffle (15) into a plurality of second flow diversion chambers (141), and two adjacent fluid channels (111) are communicated end to end through each second flow diversion chamber (141).

9. A battery module, comprising:
the heat exchange assembly (1) for a battery according to any one of claims 1 to 8,
a battery group (2) located on one side of the heat exchange body (11) of the heat exchange assembly (1), wherein a plurality of battery cells of the battery group (2) are arranged from one end of the heat exchange body (11) in an extending direction of the fluid channel (111), and each battery cell abuts against the heat exchange wall (112) of the heat exchange body (11).

10. The battery module according to claim 9, wherein the heat exchange assemblies (1) are provided on two opposite sides of the battery group (2), and main manifold structures (12) of the two heat exchange assemblies (1) are in communication with each other.

11. The battery module according to claim 9 or 10, wherein the battery cell is a cylindrical cell, and the heat exchange wall (112) is provided in a in a wave-shaped configuration.

12. The battery module according to claim 11, comprising a plurality of battery groups (2) and a plurality of heat exchange assemblies (1), wherein each heat exchange assembly (1) is provided between two adjacent battery groups (2), the plurality of battery groups (2) are disposed in a staggered arrangement, and main manifold structures (12) of two adjacent heat exchange assemblies (1) are in communication with each other.

13. A battery pack, comprising a battery case and the battery module according to any one of claims 9 to 12, wherein the battery module is assembled and fixed inside the battery case.
